# EUROPEAN PATENT SPECIFICATION

(11) **EP 2 989 884 B1**
(45) Date of publication and mention of the grant of the patent: **13.06.2018**
(21) Application number: 15178254.7
(22) Date of filing: 24.07.2015
(51) Int. Cl.: A01F 12/46, A01F 12/56, A01D 69/06

(54) **INTEGRATED JACKSHAFT FOR GRAIN ELEVATORS OF AGRICULTURAL COMBINES**
INTEGRIERTE BLINDWELLE FÜR GETREIDEAUFZÜGE LANDWIRTSCHAFTLICHER MÄHDRESCHER
ARBRE DE RENVOI INTÉGRÉ POUR ASCENSEURS DE GRAINS DE MOISSONNEUSES-BATTEUSES AGRICOLES

(30) Priority: 29.08.2014 US 201414473873
(43) Date of publication of application: 02.03.2016
(73) Proprietor: Deere & Company, Moline, IL 61265 (US)
(72) Inventor: Mackin, Ryan P, Milan, Illinois 61264 (US); Freehill, Justin C, Fenton, Illinois 61251 (US); Roe, Dennis M, Coal Valley, Illinois 61240 (US)
(74) Representative: Holst, Sönke

(56) References cited:
- EP-A2- 2 918 869
- RU-C1- 2 313 931
- US-A- 3 482 577
- US-A- 3 976 084

## Description

This disclosure relates to agricultural combines, including jackshafts for driving various devices included in agricultural combines.

### Background

Agricultural combines (or "combines") are large self-propelled machines that harvest and process crop material. Combines separate grain in the crop material from other portions of the crop material and store the grain in a grain tank. The other portions of the crop material may be stored separately, or they may be spread across the ground.

Agricultural combines are driven by internal combustion engines that propel the agricultural combine over the ground and drive a variety of crop processing devices. Typically, the internal combustion engine is connected to these crop processing devices by belts and chains that connect pulleys and sprockets, respectively. The power from the internal combustion engine must be split and directed to each of these crop processing devices.

In one common arrangement commonly called a "jackshaft" arrangement, the internal combustion engine of the agricultural combine drives a belt or chain which is coupled to and drives a respective pulley or sprocket. This pulley or sprocket drives a shaft (or "jackshaft") in rotation, thereby transmitting power from the internal combustion engine to the shaft. Other pulleys or sprockets are mounted on the shaft that are respectively connected to the crop processing devices via belts or chains, respectively. The shaft itself is supported on bearings that permit it to rotate when driven by the internal combustion engine.

In this manner, power from the internal combustion engine is divided and is transmitted to several crop processing devices. By providing pulleys and sprockets on the shaft of different sizes, each crop processing device can be driven at a different speed.

EP 2 918 869 A2, published after the priority date of the present application, shows a combine with a grain elevator. The upper sprocket of the grain elevator is driven by a shaft connected to a driving sprocket on one side of the housing and to another sprocket, driving a grain auger, on the other side of the housing. A similar arrangements with a driving sprocket on one side of the elevator housing and a driven sprocket on another side thereof is shown in US 3 482 577 A. A disadvantage is that the elevator cannot be easily accessed since the sprockets are on both sides of the elevator housing.

### Summary of the Disclosure

A jackshaft and grain elevator arrangement is disclosed for an agricultural combine. A grain elevator has a housing, a drive sprocket disposed within the housing, a driven sprocket disposed within the housing, wherein a chain disposed within the housing is wrapped around the drive sprocket and the driven sprocket, and a plurality of paddles are attached to the chain. A shaft extends through the drive sprocket, wherein the shaft is fixed to the drive sprocket to drive the drive sprocket in rotation. A first pulley is disposed outside the housing, wherein the first pulley is fixed to the shaft to receive power from the internal combustion engine and is configured to transmit that power to the shaft. A second pulley is disposed outside the housing, wherein the second pulley is fixed to the shaft to receive power from the shaft and is configured to transmit that power to a first crop processing device. The first pulley is disposed on the shaft between the second pulley and the grain elevator.

The first crop processing device may be selected from the group consisting of a cleaning shoe, a straw spreader, a loading auger, and a tailings elevator. A third pulley may be disposed outside the housing, wherein the third pulley is attached to the shaft to receive power from the shaft and transmit that power to a second crop processing device. The second crop processing device may be selected from the group consisting of a cleaning shoe, a straw spreader, a loading auger, and a tailings elevator. The shaft may be supported for rotation on bearings, wherein the bearings are fixed to opposing sides of the housing. The shaft, the first pulley, the second pulley, and the drive sprocket may rotate about a common rotational axis.

The details of one or more embodiments are set forth in the accompanying drawings and the description below. Other features and advantages will become apparent from the description, the drawings, and the claims.
FIG. 1 is a side view of an example agricultural combine with a grain elevator;
FIG. 2 is a perspective view of various devices of the agricultural combine of FIG. 1, including a grain elevator with an integrated jackshaft assembly, taken from an opposite side of the combine as FIG. 1;
FIG. 3 is a rear view of the grain elevator and devices of FIG. 2; and
FIG. 4 is an enlarged view of the grain elevator and jackshaft of FIG. 2, taken from a similar perspective as in FIG. 3; and
FIG. 5 is a cross-sectional view taken along a plane through the jackshaft of FIG. 2, from a similar perspective as in FIG. 3.

Like reference symbols in the various drawings indicate like elements.

The term "wheel," as used herein, means any sprocket, pulley, or similar component that is configured to receive or transmit rotational power. The term "input wheel," as used herein, means any wheel mounted on a shaft that is configured to receive power from a chain, or belt, respectively, and to transmit that power to the shaft. A pulley or sprocket configured as an input wheel, may be referred to as an "input pulley," or an "input sprocket." The term "output wheel," as used herein, means any wheel that is configured to be supported on a shaft, to receive power from the shaft, and to transmit that power to a crop processing device via a chain or belt, respectively. A pulley or sprocket configured as an output wheel, may be referred to as an "output pulley," or an "output sprocket." The term "crop processing device," as used herein, means a device for processing crop material. Crop processing devices may be configured as harvesting heads (including reels, conveyors, augers, reciprocating knives, and other devices included in the harvesting heads), threshing rotors, threshing drums, straw walkers, crop spreaders, crop choppers, sieves, chaffers, fans, grain elevators, augers, cleaning shoes, and so on.

As noted above, agricultural combines may include various crop processing devices. Many combines utilize rotating jackshafts to transmit rotational power to these crop processing devices.

As discussed in detail herein, it may be useful to integrate a jackshaft into a grain elevator (or "elevator") in order to power various crop processing devices other than the grain elevator. Such a jackshaft may be supported by a housing of the elevator, such that rotating the jackshaft moves grain within the elevator. For example, a sprocket may be attached to the jackshaft to drive a chain within the elevator.

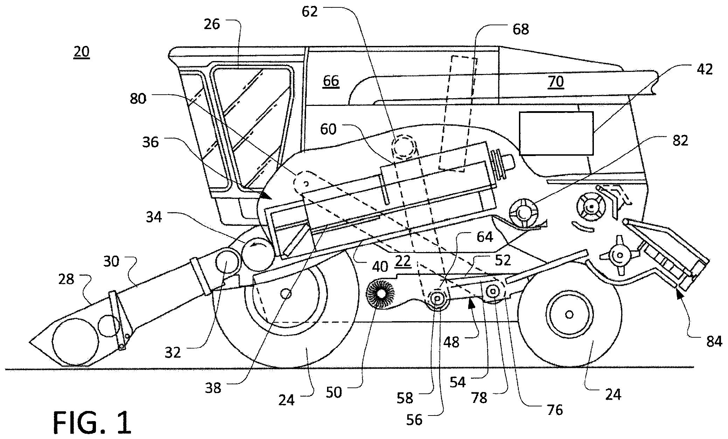

Referring now to FIG. 1, an example jackshaft and elevator arrangement may be implemented with respect to an example agricultural combine 20, or with respect to a variety of other agricultural combines. As used below, directional terms such as "front" or "forward" may refer to the forward direction of travel of combine 20, which is toward the left in FIG. 1.

Likewise, directional terms such as "back" or "rear" may refer to the reverse direction of travel of the combine, which is toward the right in FIG. 1. The terms "transverse", "lateral", "side-to-side" or the like may refer to a generally horizontal direction that is at a right angle to the forward (or rearward) direction.

As depicted in FIG. 1, the example agricultural combine (or "combine") 20 includes a chassis 22 with wheels 24. The wheels 24 are mounted to a chassis 22, and engage with the ground in order to propel the combine 20. A cab 26, also mounted to the chassis 22, houses an operator as well as various devices to control the combine 20. The wheels 24 and other devices of the combine 20 are powered by an internal combustion engine 42.

A header 28 is supported at the front of the combine 20 in order to cut and gather crop material from a field. The header 28 is supported by a feederhouse 30, which is pivotally mounted to the chassis at mount 32. The feederhouse 30 may include, for example, an inclined conveyor (not shown) for transport of cut crop material from the header 28 into the body of the combine 20.

After passing over a guide drum 34 or feed accelerator, the crop material from the feederhouse 30 reaches an axially oriented threshing device 36. (Other embodiments may include laterally oriented or other threshing devices (not shown).) In the embodiment depicted, threshing device 36 includes a rotor 38, on which various threshing elements (not shown) are mounted. The rotor 38 rotates above a grated or sieved concave 40, such that crop material passing between the threshing elements and the concave 40 is separated, at least in part, into grain and chaff (or other non-grain material).

Grain and chaff passing through the concave 40 fall (or are actively fed) into a cleaning shoe 48, for further cleaning. The cleaning shoe 48 includes a fan 50, for generating generally rearward air flow, as well as a sieve 52, and a chaffer 54. The sieve 52 and chaffer 54 are suspended from the chassis 22 by pivot arms (not shown) and are connected, respectively, to rocker arms (not shown) mounted to disks (or other devices). As the fan 50 blows air across and through the sieve 52 and the chaffer 54, rotation of the disks causes reciprocating motion of the sieve 52 and the chaffer 54, via movement of the rocker arms. The combination of this motion of the sieve 52 and the chaffer 54 with the air flow from the fan 50 generally causes the lighter chaff to be blown upward and rearward within the combine 20, while the heavier grain falls through the sieve 52 and the chaffer 54 and accumulates in a clean grain trough 56 near the base of the combine 20. An auger 58 within the trough 56 rotates to move the cleaned grain through the trough 56 to the lower end of a clean grain elevator 60 (shown in phantom lines in FIG. 1).

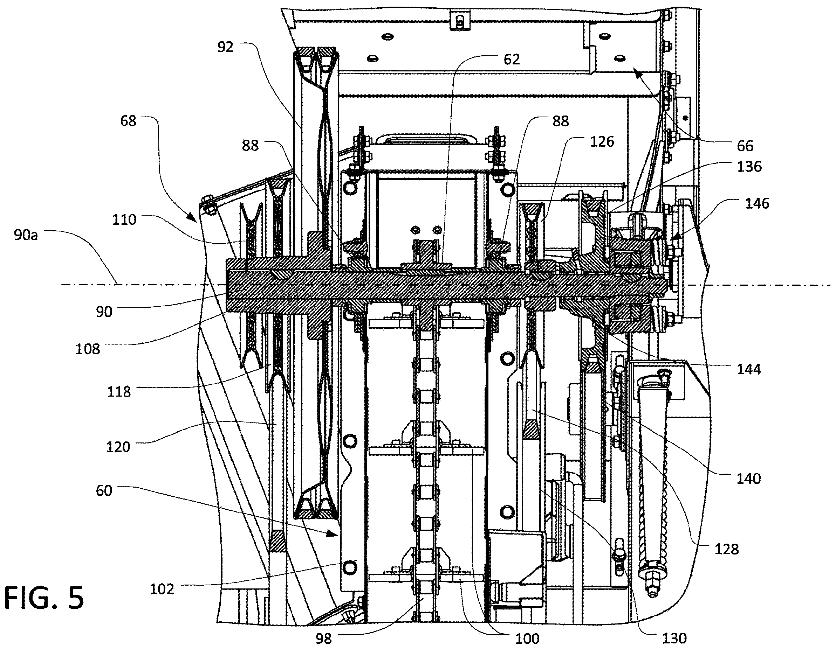

The elevator 60 includes a chain drive, with a chain (see FIG. 5) seated on upper and lower sprockets 62 and 64, respectively, and extending along the length of the elevator 60. Various paddles or baskets (not shown) are spaced at regular intervals along the chain such that when the sprockets 62 and 64 drive the chain, the paddles or baskets lift clean grain from the trough 56 towards a grain tank 66 for temporary storage. In the embodiment depicted, the elevator 60 lifts the clean grain only part of the distance between the trough 56 and the grain tank 66. At the top of the elevator 60, the clean grain is transferred from the elevator 60 to a loading auger 68, which further elevates the clean grain into the grain tank 66. (In such a configuration, the loading auger 68 may be viewed as a secondary grain elevator cooperating with the grain elevator 60. It will be understood that various other configurations are possible) The clean grain in grain tank 66 can be transferred from the tank 66 onto a grain wagon, trailer or truck (not shown) via a discharge chute 70.

Crop material that does not fall through the sieve 52 and the chaffer 54 into the clean grain trough and is not carried sufficiently far to the rear of the combine 20 by the air flow from the fan 50 falls into a tailings trough 76 housing a tailings auger 78. The tailings auger 78 rotates in order to convey the material to a tailings elevator 80. The tailings elevator 80 then conveys the crop material forward and upward for re-threshing (or other processing) by the various devices of the combine 20.

Crop material that reaches the rearward end of the rotor 38 without passing through the concave 40 is fed to a rethresher (not shown) or a throw drum 82, which throws lighter material (i.e., chaff) rearward while directing heavier material downward towards the tailings auger 78. Material thrown rearward by the throw drum 82 (or a rethresher) as well as chaff blown rearward by the fan 50 are conveyed into a straw chopper or various other devices for processing chaff. The resulting non-grain stream of crop material is then ejected from the rear of the combine 20, with a straw spreader 84 or other device spreading the material toward either side of the combine 20.

As also discussed below, various of the devices noted above (and other rotary devices of the combine 20) are rotationally powered by a system of drive members and conveyers. For example, an engine (not shown) of the combine 20 may drive the rotation of one or more powered drive members (not shown in FIG. 1), which may in turn drive the rotation of various rotating components and devices.

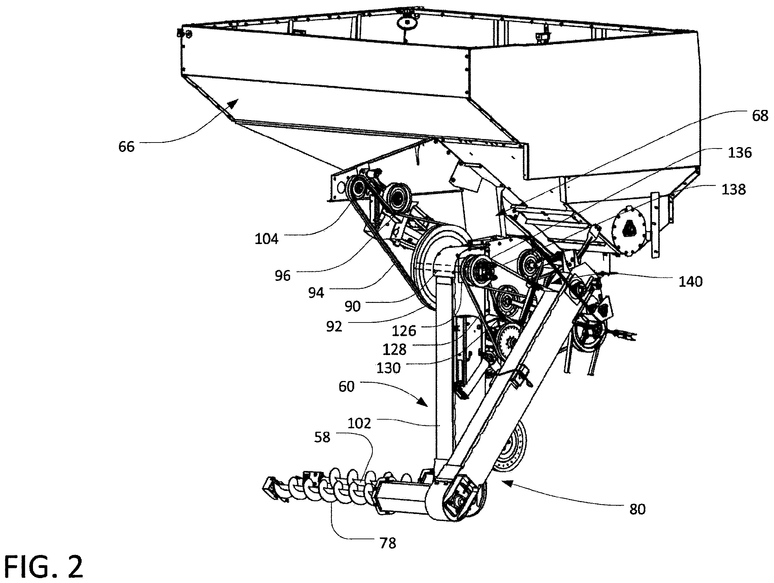

As explained in greater detail below, various of the devices noted above may be driven via a single jackshaft that is integrated with the elevator 60. Referring also to FIGS. 2-5, an integrated jackshaft 90 is mounted at the upper end of the clean grain elevator 60. Referring in particular to FIG. 5, the jackshaft 90 extends laterally across a housing 102 of the elevator 60, and is rotatably supported with respect to the housing 102 by various bearings 88. The upper sprocket 62 is fixedly and coaxially attached to the jackshaft 90 within the housing 102, and a chain 98 (i.e., other "elevator belt") supporting various paddles 100 is seated on the sprocket 62. Accordingly, rotation of the jackshaft 90 about axis of rotation 90a causes the sprocket 62 also to rotate around axis of rotation 90a and thereby drives the paddles 100, via the chain 98, to carry grain upwards within the housing 102. The chain 98 is also seated on the lower sprocket 64 (see FIG. 1), such that the lower sprocket 64 rotates to support the chain 98. (Because the sprocket 62 rotates to drive the chain 98, the sprocket 62 may be referred to as a "drive sprocket." Likewise, because the sprocket 64 is rotated by the chain 98, the sprocket 64 may be referred to as a "driven sprocket.")

In the embodiment depicted, the jackshaft 90 is formed as a unitary or single-piece shaft. It will be understood that other integrated jackshafts need not necessarily exhibit unitary construction. For example, in certain embodiments, a single jackshaft formed from multiple pieces may be utilized in an integrated jackshaft assembly.

Still referring to FIGS. 2-5, in the combine 20, a pulley 92 is fixedly and coaxially attached to the jackshaft 90 on one side of the housing 102. Another pulley 104 is mounted remotely from the pulley 92, with two belts 94 seated on and extending between the main drive pulley 92 and the pulley 104. Accordingly, the pulley 92 (and the jackshaft 90) may be rotated around the axis of rotation 90a when the engine 42 (see FIG. 1) rotates the pulley 104 .

As discussed in greater detail below, various output wheels (e.g., various additional pulleys) may also be attached to the jackshaft 90 such that the output wheels may also receive rotational power via the pulleys 104 and 92. The output wheels may be connected by various belts (or chains) to various input wheels for various remotely located crop processing devices. When the output wheels rotate, the belts may accordingly transmit rotational power from the output wheels to the crop processing devices.

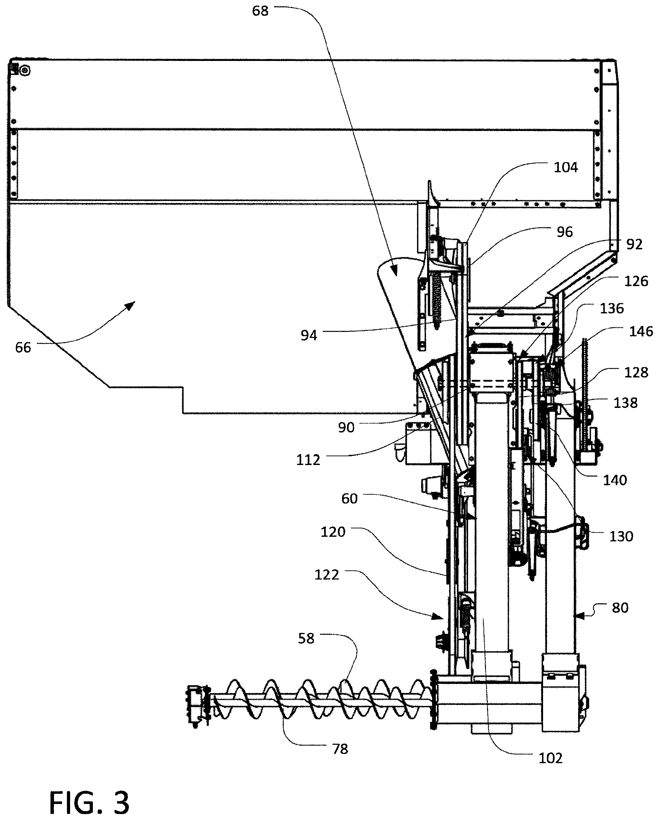

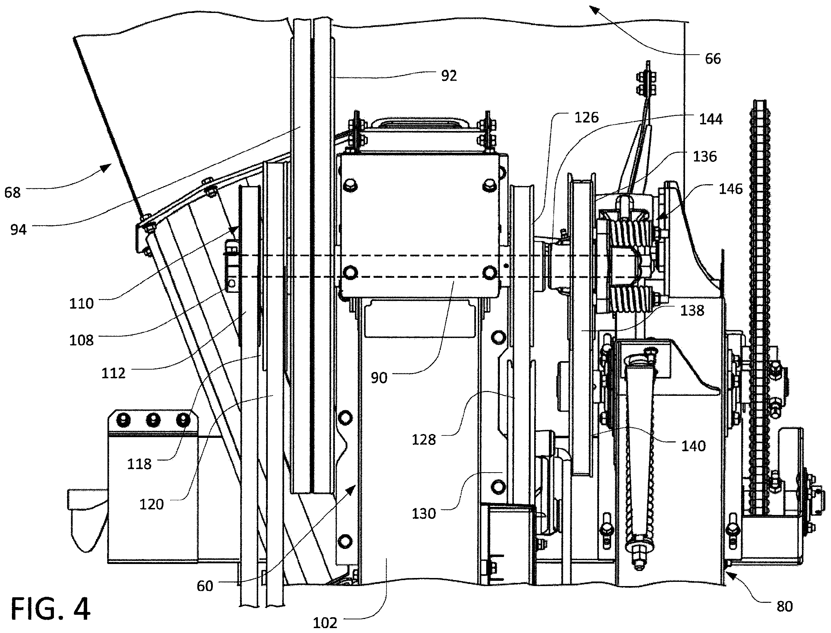

As depicted, the pulley 92 is attached to the jackshaft 90 via a hub 108 (see FIGS. 4 and 5) that is also fixedly and coaxially attached to the jackshaft 90. Various output wheels may also be attached to the jackshaft 90 via the hub 108. For example, in the combine 20, an output pulley 118 and an output pulley 110 are also fixedly and coaxially attached to the jackshaft 90 via the hub 108. A belt 120 extends between and is seated on the pulley 118 and an input pulley 122 for the cleaning shoe 48 (see, in particular, FIG. 3). The pulley 122 is attached to one or more rotating components of the cleaning shoe 48, such as a support disk for various rocker arms (not shown). As such, rotation of the pulley 118, via rotation of the jackshaft 90, causes the pulley 122 to rotate and thereby drives the rotation of various components of the cleaning shoe 48. Similarly, a belt 112 extends between and is seated on the pulley 110 and an input pulley (not shown) for the straw spreader 84. As such, rotation of the pulley 110, via rotation of the jackshaft 90, provides rotational power to the straw spreader 84.

Various output wheels may additionally (or alternatively) be attached to the jackshaft 90 independently of the hub 108. For example, in the embodiment depicted, output pulleys 126 and 136 are fixedly and coaxially attached to the jackshaft 90 on an opposite side of the housing 102 from the hub 108 and the pulleys 92, 110, and 118. A belt 128 extends between and is seated on the pulley 126 and an input pulley 130 for the loading auger 68. As such, rotation of the pulley 126, via rotation of the jackshaft 90, causes the pulley 130 to rotate and thereby drives the rotation of the loading auger 68. Similarly, a belt 138 extends between and is seated on the pulley 136 and an input pulley 140 for the tailings elevator 80. As such, rotation of the pulley 136, via rotation of the jackshaft 90, causes the pulley 140 to rotate and thereby drives operation of the elevator 80.

Other devices may also be included. For example, in the embodiment depicted, the output pulley 136 is attached to the jackshaft 90 via a hub 144 (see, e.g., FIGS. 4 and 5). A clutch device 146 engaged with the hub 144 may be configured to stall transmission of power between the pulleys 136 and 140 when the tailings elevator 80 stalls or plugs. In this way, for example, the clutch device 146 may act to prevent slippage of the belt 138 (or other belts of the depicted assembly).

As depicted in the figures, various tensioning pulleys (e.g., pulley 96, in FIG. 1) and other devices may also be included in the combine 20. In certain embodiments, these tensioning pulleys and other devices may, for example, support effective and efficient transmission of power via various belts (or chains) between various wheels. It will be understood that various configurations and combinations of tensioning pulleys and other devices may be possible, including configurations and combinations not depicted in the various figures.

It will further be understood that an integrated jackshaft arrangement, as contemplated by this disclosure, may be generally implemented with respect to various combines (not shown) other than those configured as the combine 20. Likewise, an integrated jackshaft arrangement may be implemented using different wheels and belts (or chains) than those depicted in the combine 20. Also, although certain crop processing devices of the combine 20 are specifically depicted as being driven by certain output wheels on the jackshaft 90, it will be understood that other devices (or other combinations of devices) may additionally (or alternatively) be driven by output wheels on the jackshaft 90 (or another integrated jackshaft). Further, although the jackshaft 90 is depicted as being structurally supported by the clean grain elevator 60, an integrated jackshaft assembly may be utilized with respect to other components of the combine 20, including other elevators.

## Claims

1. A jackshaft and grain elevator arrangement for an agricultural combine (20) driven by an internal combustion engine (42), the jackshaft and grain elevator arrangement comprising:
a grain elevator (60) with a housing (102), a drive sprocket (62) disposed within the housing, a driven sprocket (64) disposed within the housing, wherein a chain (98) disposed within the housing is wrapped around the drive sprocket (62) and the driven sprocket (64), and a plurality of paddles (100) are attached to the chain (68);
a shaft (90) extending through the drive sprocket (62), wherein the shaft (90) is fixed to the drive sprocket (62) to drive the drive sprocket (62) in rotation;
a first pulley (92) disposed outside the housing (102), wherein the first pulley (92) is fixed to the shaft (90) to receive power from the internal combustion engine and is configured to transmit that power to the shaft (90); and
a second pulley (110) disposed outside the housing, wherein the second pulley (110) is fixed to the shaft (90) to receive power from the shaft (90) and is configured to transmit that power to a first crop processing device,
**characterized in that** the first pulley (92) is disposed on the shaft (90) between the second pulley (110) and the grain elevator (60).

2. The jackshaft and grain elevator arrangement of claim 1, wherein the first crop processing device is selected from the group consisting of a cleaning shoe (48), a straw spreader (84), a loading auger (68), and a tailings elevator (80).

3. The jackshaft and grain elevator arrangement of claim 2, further comprising a third pulley (126) disposed outside the housing (102), wherein the third pulley (126) is attached to the shaft (90) to receive power from the shaft and transmit that power to a second crop processing device.

4. The jackshaft and grain elevator arrangement of claim 3, wherein the second crop processing device is selected from the group consisting of a cleaning shoe (48), a straw spreader (84), a loading auger (68), and a tailings elevator (80).

5. The jackshaft and grain elevator arrangement of claim 1, wherein the shaft is supported for rotation on bearings (88), and further wherein the bearings are fixed to opposing sides of the housing (102).

6. The jackshaft and grain elevator arrangement of claim 1, wherein the shaft, the first pulley, the second pulley, and the drive sprocket all rotate about a common rotational axis (90a).

7. A combine with an arrangement according to one of the preceding claims.

## Patentansprüche

1. Blindwellen- und Getreideaufzuganordnung für einen landwirtschaftlichen Mähdrescher (20), angetrieben durch einen Verbrennungsmotor (42), wobei die Blindwellen- und Getreideaufzuganordnung Folgendes umfasst:
einen Getreideaufzug (60) mit einem Gehäuse (102), ein in dem Gehäuse angeordnetes Antriebskettenrad (62) und ein in dem Gehäuse angeordnetes angetriebenes Kettenrad (64), wobei eine in dem Gehäuse angeordnete Kette (98) um das Antriebskettenrad (62) und das angetriebene Kettenrad (64) gewickelt ist und eine Vielzahl von Schaufelblättern (100) an der Kette (68) angebracht ist,
eine Welle (90), die sich durch das Antriebskettenrad (62) erstreckt, wobei die Welle (90) an dem Antriebskettenrad (62) befestigt ist, um das Antriebskettenrad (62) in Drehung anzutreiben,
eine erste Riemenscheibe (92), die außerhalb des Gehäuses (102) angeordnet ist, wobei die erste Riemenscheibe (92) an der Welle (90) befestigt ist, um Energie von dem Verbrennungsmotor zu erhalten, und dazu ausgelegt ist, diese Energie zu der Welle (90) zu übertragen, und
eine zweite Riemenscheibe (110), die außerhalb des Gehäuses angeordnet ist, wobei die zweite Riemenscheibe (110) an der Welle (90) befestigt ist, um Energie von der Welle (90) zu erhalten, und dazu ausgelegt ist, diese Energie zu einer ersten Erntegutverarbeitungsvorrichtung zu übertragen,
**dadurch gekennzeichnet, dass** die erste Riemenscheibe (92) an der Welle (90) zwischen der zweiten Riemenscheibe (110) und dem Getreideaufzug (60) angeordnet ist.

2. Blindwellen- und Getreideaufzuganordnung nach Anspruch 1, wobei die erste Erntegutverarbeitungsvorrichtung aus der Gruppe ausgewählt ist, die aus einer Reinigungsbacke (48), einem Strohverteiler (84), einem Beladeschneckenförderer (68) und einem Rückstandsaufzug (80) besteht.

3. Blindwellen- und Getreideaufzuganordnung nach Anspruch 2, die ferner eine dritte Riemenscheibe (126) umfasst, die außerhalb des Gehäuses (102) angeordnet ist, wobei die dritte Riemenscheibe (126) an der Welle (90) befestigt ist, um Energie von der Welle zu erhalten und diese Energie zu einer zweiten Erntegutverarbeitungsvorrichtung zu übertragen.

4. Blindwellen- und Getreideaufzuganordnung nach Anspruch 3, wobei die zweite Erntegutverarbeitungsvorrichtung aus der Gruppe ausgewählt ist, die aus einer Reinigungsbacke (48), einem Strohverteiler (84), einem Beladeschneckenförderer (68) und einem Rückstandsaufzug (80) besteht.

5. Blindwellen- und Getreideaufzuganordnung nach Anspruch 1, wobei die Welle zur Drehung auf Lagern (88) gehalten ist und wobei ferner die Lager auf gegenüberliegenden Seiten des Gehäuses (102) befestigt sind.

6. Blindwellen- und Getreideaufzuganordnung nach Anspruch 1, wobei sich die Welle, die erste Riemenscheibe, die zweite Riemenscheibe und das Antriebskettenrad alle um eine gemeinsame Drehachse (90a) drehen.

7. Mähdrescher mit einer Anordnung nach einem der vorhergehenden Ansprüche.

## Revendications

1. Ensemble arbre de renvoi et ascenseur de grains pour une moissonneuse-batteuse agricole (20) entraîné par un moteur à combustion interne (42), l'ensemble arbre de renvoi et ascenseur de grains comprenant :
un ascenseur de grains (60) ayant un boîtier (102), un pignon d'entraînement (62) disposé dans le boîtier, un pignon entraîné (64) disposé dans le boîtier, une chaîne (98) disposée dans le boîtier étant enroulée autour du pignon d'entraînement (62) et du pignon entraîné (64), et une pluralité de palettes (100) étant fixées à la chaîne (68) ;
un arbre (90) s'étendant à travers le pignon d'entraînement (62), l'arbre (90) étant fixé au pignon d'entraînement (62) pour entraîner le pignon d'entraînement (62) en rotation ;
une première poulie (92) disposée à l'extérieur du boîtier (102), la première poulie (92) étant fixée à l'arbre (90) pour recevoir la puissance du moteur à combustion interne et étant conçue pour transmettre cette puissance à l'arbre (90) ; et
une deuxième poulie (110) disposée à l'extérieur du boîtier, la deuxième poulie (110) étant fixée à l'arbre (90) pour recevoir la puissance de l'arbre (90) et étant conçue pour transmettre cette puissance à un premier dispositif de traitement de récolte,
**caractérisé en ce que** la première poulie (92) est disposée sur l'arbre (90) entre la deuxième poulie (110) et l'ascenseur de grains (60).

2. Ensemble arbre de renvoi et ascenseur de grains selon la revendication 1, le premier dispositif de traitement de récolte étant choisi dans le groupe constitué par un crible (48), un éparpilleur de paille (84), une vis de chargement (68), et un ascenseur à résidus (80).

3. Ensemble arbre de renvoi et ascenseur de grains selon la revendication 2, comprenant en outre une troisième poulie (126) disposée à l'extérieur du boîtier (102), la troisième poulie (126) étant fixée à l'arbre (90) pour recevoir la puissance de l'arbre et transmettre cette puissance à un second dispositif de traitement de récolte.

4. Ensemble arbre de renvoi et ascenseur de grains selon la revendication 3, le second dispositif de traitement de récolte étant choisi dans le groupe constitué par un crible (48), un éparpilleur de paille (84), une vis de chargement (68), et un ascenseur à résidus (80).

5. Ensemble arbre de renvoi et ascenseur de grains selon la revendication 1, l'arbre étant supporté pour tourner sur des paliers (88), et en outre les paliers étant fixés à des côtés opposés du boîtier (102).

6. Ensemble arbre de renvoi et ascenseur de grains selon la revendication 1, l'arbre, la première poulie, la deuxième poulie, et le pignon d'entraînement tournant tous autour d'un axe de rotation commun (90a).

7. Moissonneuse-batteuse ayant un ensemble selon l'une des revendications précédentes.
